# EUROPEAN PATENT SPECIFICATION

(11) **EP 2 569 733 B1**
(45) Date of publication and mention of the grant of the patent: **03.12.2014**
(21) Application number: 11728669.0
(22) Date of filing: 13.05.2011
(51) Int. Cl.: G06K 17/00, H04L 12/28

(54) **INTEGRATED MODULAR ACTIVE SAFETY SYSTEM BASED ON ACTIVE DUAL-FREQUENCY RFID DEVICES**
INTEGRIERTES MODULARES AKTIVES SICHERHEITSSYSTEM AUF DER BASIS VON AKTIVEN DOPPELFREQUENZ-RFID-VORRICHTUNGEN
SYSTÈME DE SÉCURITÉ ACTIVE MODULAIRE INTÉGRÉ À BASE DE DISPOSITIFS RFID ACTIFS BI-FRÉQUENCE

(30) Priority: 14.05.2010 IT FI20100105
(43) Date of publication of application: 20.03.2013
(73) Proprietor: Advanced Microwave Engineering S.R.L., 50143 Firenze (IT)
(72) Inventor: SALVADOR, Claudio, I-50018 Scandicci (IT); BONIFACIO, Filippo, I-50134 Firenze (IT); SALVINI, Marco, I-57025 Piombino (IT); ZANI, Filippo, I-50054 Fucecchio (IT)
(74) Representative: Cinquantini, Bruno
(86) International application number: PCT/IB2011/052114
(87) International publication number: WO 2011/141897

(56) References cited:
- EP-A2- 1 209 615
- WO-A2-2006/102538
- US-A- 5 874 724
- US-A1- 2005 058 102
- US-A1- 2007 115 125

## Description

### Field of the invention

The present invention relates to the field of devices for controlling safety and preventing accidents at the workplaces, in particular to the field of devices adapted to implement the so-called "active safety" based on the smart application of advanced technologies, such as for example RFID technology.

An active safety solution is a set of integrated automatic systems which prevents accidents by identifying the potential danger.

### Prior art

The issue of accidents at the workplace has always been the subject of great attention by lawmakers and the general public. Suffice it to say that in 2008, 874,940 accidents occurred at workplaces, 1,120 of which fatal.

The types of accidents at workplace is very vast and so are the number of protection devices and systems present on the market.

The systems currently available for guaranteeing the safety of operators in areas at risk and subjected to safety regulations belong to various categories.

A first group of occupational safety devices concerns access control, by means of identification, to potentially dangerous areas. This is a function that prevents, for example, unauthorized and untrained people from introducing themselves in potentially dangerous zones, cuts off access to particular zones permanently or when a particular event occurs, such as the crossing of a vehicle etc.

An important function performed by access control systems resides in the possibility of knowing the number and identity of the workers present in a given area in real time, this information being very important in case of events such as, for example, fires, collapses etc.

Access control may be performed with specific passageways, possibly provided with RFID readers, which allow to read TAGs made available to operators authorized to enter.

A second group of devices concerns passive personal protection and comprises those devices that, when a dangerous event occurs, reduce the harmful effects on the operator of the event itself.

This group includes personal protection devices, such as gloves, safety footwear, gas masks, protective helmets etc.

The main problem, in this case, is linked to the failure to use this type of devices, due to operator's imprudence or inexperience.

There are systems in the prior art which perform control actions of the regular presence of the single devices on the operator, e.g. based on passive RFID transponder or devices indicated as PAN (Personal Area Network), WPAN (Wireless Personal Area Network) or BAN (Body Area Network) devices.

In case of passive RFID, said systems comprise entrance passageways provided with reading units which, when crossed by the operator, allow to read the passive TAGs located in the various protective garments and accessories worn by said operator.

The fundamental limit of systems of this type consists in that the control only occurs when the operator crosses said entrance passageways.

For this reason, systems have been studied which contemplate the arrangement of active transceiver devices in the operator's various protection devices. Such transceivers, associated to the operator's garments and/or the accessories, can create an effective Body Area Network (BAN), in which one of these active transceiver devices performs the function of master. The master can thus recognize in real time whether the operator's various garments and/or accessories are present or not throughout the entire working day.

Typical examples of systems of this type exploit communication channels with ZigBee or equivalent protocols for the purpose.

A third group of devices concerns instead the detection of intrusions in particularly dangerous areas, such as in the proximity of presses, shearing machines, machinery on rails etc. These devices, implemented, for example, by means of appropriate light barriers, may work reliably only in case of static machinery because they work by delimiting controlled areas about said static machinery or, in the case of machinery moving along known directives, by detecting the presence of generic obstacles along their path.

Devices of this type are however entirely inapplicable in case of free moving means, such as, for example, forklift trucks.

A further group of devices allows to avoid collisions between moving machinery. These devices are generally made using optical or radiofrequency technology. These systems are very effective if the relative angular position of the machinery at risk of collision is not subject to particular variations, such as in the case of bridge cranes moving along the same rail.

Considerable targeting problems arise in situations in which the relative angular position between the means is variable, as in the very frequent case of bridge cranes on different planes, which often make such system difficult to apply.

There are then a series of extremely dangerous situations for which, until today, no type of protection system is available, such as, for example, environments in which heavy wheel-mounted means operate - such as tractors, earth-moving machinery or forklift trucks - moving in areas in which workers are present on foot. An example is that of harbors where large wheel-mounted stackers with extremely reduced vision are present on yards where operators may circulate on foot. Harbors are only an example of the vast number of similar situations which occur in many other industrial sectors, such as the paper industry, steelworks, wood industry, constructions, logistics and transports in general.

We can thus conclude that although there are many systems and technologies in the prior art for increasing the level of safety at the workplace, these systems are extremely focused only on one type of risk and may be difficult to integrate with one another. This means that in order to integrate several protection functions it is today necessary to sum different technologies and equipment with the consequent increase of complexity, costs and difficulty of use.

In places which are complex to manage, such as construction sites, monitoring the actual use of personal protection devices, accesses and the protection of given areas so as to detect possible intrusions and to promptly deactivate as a consequence the dangerous machinery which is running in such areas requires, in the prior art, the use of at least three different, independent systems made using different technologies.

Indeed, in the prior art there are no integrated, modular systems which allow to implement several safety functions in the same environment concerned by a plurality of risky situations for operators, such as, for example, construction sites, workshops, laboratories, production lines etc.

Document WO 2006/102538 describes a system corresponding to the preamble of independant claim 1.

### Brief description of the figures

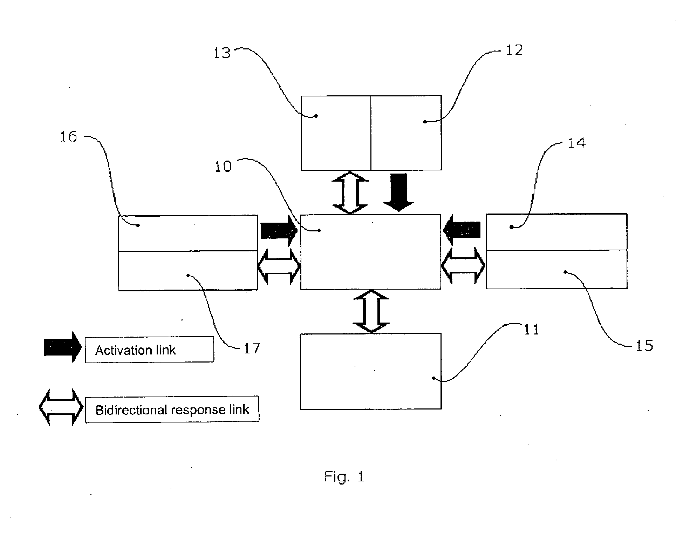

Fig. 1: block chart of the apparatus according to the present invention.

### Summary of the invention

The present invention uses a technology based on active dual-frequency RFID devices for creating an integrated, modular active safety system intended in particular for the scope of prevention of accidents at the workplace.

The innovation resides in the application of active dual-frequency RFID devices which allow to considerably increase safety levels in areas in which, in the prior art, there are no suitable devices and further allows to make a modular safety system which simply and effectively integrates several functions with the possibility of configuring the working environment according to contingent needs.

### Detailed description of the invention

The technology of active dual-frequency RFID devices protected by European patent EP1209615, filed by the owner of the present application, contemplates the use of three fundamental blocks:
an activator or illuminator, a dual-frequency controlled RFID transmitter (indicated hereinafter as dual-frequency RFID TAG or simply TAG) and a receiver. The activator typically transmits a microwave signal. The TAG is provided with a very low consumption, high reactivity receiver so that once it reaches the action zone of said activator it is capable of recognizing the signal thereof, configuring itself and proceeding, if required, with a transmission to said receiver, preferably using a different radio channel. The activator and receiver may be within the same apparatus or separate.

A TAG is also configured by the illuminator when it is activated by the latter. In such a manner, the TAG knows the identification and the properties of the activating illuminator.

In this manner, the response method may be configured according to the particular need. For example, in the case of systems which must generate an alarm, the response must privilege speed by choosing, for example, channels explicitly dedicated thereto.

The main features which make this technology different from other RFID systems are: simple directional activation range with variable distance, from contact to over 20m; very low consumption of the TAG at rest such to guarantee correct efficiency for years also with small-sized batteries (e.g. CR2032); high reactivity. Indeed, only few hundreds of milliseconds elapse from the moment in which the TAG enters in the range of the activator to when the receiver has the information on the presence of the TAG in the "illuminated" zone.

In a particular version of these devices, the response channel is bidirectional and further adapted to communicate, in particular, with RF transceiver devices capable of transmitting-receiving on this channel.

Said RF transceiver devices are battery powered, as the TAG, but are free from very low consumption, high reactivity receivers.

The present invention relates to a modular surveillance device of working areas based on the use of active dual-frequency RFID technology comprising at least one dual-frequency RFID device and at least one further RF transceiver device. Said at least one active dual-frequency RFID device comprises, in turn, an activator or illuminator, at least one controlled TAG transmitter and at least one receiver. Said at least one further RF transceiver device preferably consists of passive RFID transponders or devices generally indicated as PAN (Personal Area Network), WPAN (Wireless Personal Area Network) or BAN (Body Area Network). The apparatus object of the present invention allows to make a complex safety system characterized in that each operator is provided with at least one active dual-frequency TAG. Furthermore, said operators will be provided with a plurality of garments, accessories or instruments, each associated to a RF transceiver device, preferably consisting of passive RFID transponders or PAN, WPAN or BAN devices, often generically indicated as PAN. Furthermore, a plurality of machines and apparatuses equipped with at least one activator or illuminator and with a receiver associated to said active dual-frequency TAG will be present within the working area.

The modular nature of the apparatus according to the present invention allows to integrate different functions for reaching different preferred embodiments.

We will see in detail an embodiment of the present invention which considers a concerned area consisting of a construction site with various machines located therein and various operators working there.

In order to respect the regulations in force in the concerned area, the operator must be provided with safety equipment. The present invention allows to constantly monitor the presence of said safety equipment worn by each operator. We will assume, by way of example, that the operator is provided with garments and personal protection accessories (gloves, footwear, harness, helmet etc.), all provided with a RF transceiver 11 adapted to form a PAN (Personal Area Network) or a BAN (Body Area Network) such as to control the actual presence of each of the accessories and/or of the garments that the operators are obliged to wear to comply with the safety requirements in force in the area they are working in.

One of said RF transceivers consists of a TAG type device 10 configured as MASTER device or "coordinator" of said PAN or BAN network, and is adapted to manage the connection with the other non-MASTER transceiver devices - typically according to a star architecture - and to collect the information sent to said other RF transceiver devices of non-MASTER type.

As previously illustrated, the operation of said active dual-frequency RFID devices contemplates that the TAG has a first activation radio connection transmitted by the illuminator/activator and a second radio connection transmitted, in turn, from said TAG to said receiver.

The fundamental feature of said active dual-frequency RFID devices resides in that the TAG has the possibility of exploiting the response radio channel, possibly bidirectional, autonomously and also in absence of activation.

Consequently, said TAG notwithstanding its "normal" functions described above may become the MASTER node of said PAN or BAN network comprising the various personal protection devices. Indeed, it may advantageously establish periodical communications with the other devices located on the various protective accessories/garments of the operator, so as to control the actual presence thereof. In this manner, we can substantially associate the presence information of the individual device to the typically spatial information provided by the active dual-frequency RFID technology.

The present invention allows to modulate the access control criteria. For example, it is possible to allow access to given zones only in presence of appropriate devices or to associate the information available at the end of the day of the actual presence or not of a given device in a given situation in which it is required.

In conclusion, we can affirm that equipping an operator with an active dual-frequency RFID technology TAG jointly with the implementation of a specific infrastructure allows to implement safety solutions not otherwise available in the prior art, to improve the management of already existing systems and to integrate multiple safety functions in a same TAG, which will be explained below.

Controlled passageways for preventing access to unauthorized people will be present in the aforesaid construction site. The present invention is capable of managing the function of controlling access to controlled areas.

Said access control allows for example to prevent the access to whom is not equipped with the garment, the distinguishing marking or the protection device associated to said TAG 10 and to know who is within the area, information which is particularly useful in case of emergency.

This function is made by means of passageways provided with at least an illuminating actuator 12 and at least one receiver 13 associated to said TAG 10, possibly connected in wired or wireless mode to a memory or remote processing unit.

The present invention allows to modulate the access control criteria to different passageways. For example, access may be allowed to given zones only in presence of appropriate garment and accessories worn by the operator.

In the aforesaid construction site, there will be static type machinery and means, such as, for example, presses, sawing machines, conveyor belts etc., the safety of which must be guaranteed for operators. The present invention is capable of managing the function of protecting the operator from the dangers deriving from static machinery.

This function of the present invention is implemented by installing at least one illuminating actuator 14 and one receiver 15 so as to cover the danger zone related to said static machinery. The presence of the operator provided with TAG 10 in the aforesaid danger zone causes the activation of the same TAG 10 and the transmission of a radiofrequency signal to said receiver 15, which can carry out different actions, such as activating alarm signals or inhibiting machine operation. With regards to machinery or self-propelled means (forklift trucks, stackers, earth-moving machines etc.) possibly present in said construction site, the present invention is applied in the following manner and is adapted to protect the operator from possible collisions with said moving machinery.

In this case, at least one illuminating actuator 16 and at least one receiver 17 are appropriately located onboard of each of said machines or moving means to guarantee a sufficient safety zone around them. In this manner, when said TAG 10 associated to the operator enters the range of action of said illuminating actuators 16 it is activated and transmits to the receiver 17 onboard of the means itself. This allows to detect the presence of operators on foot in proximity of said means.

In a particular embodiment, concerning the application to wheel-mounted means, a plurality of illuminating actuators 16 is associated on the perimeter beyond at least one receiver 17. At least one receiver 17 transfers the data to a display unit, e.g. a synoptic panel that allows the driver of the vehicle to know whether operators are present nearby or not in addition to their approximate position. This is performed by virtue of the encoded activation of the TAG 10 by the illuminating actuators 16, thus the receiver receives not only the identification of the TAG 10 but also the reference of the illuminating actuator 16 that illuminated it.

An important development of this function is given by the possibility of modulating the coverage zones of the illuminators as the direction and speed of the means varies. For example, the coverage distance may be increased on the back of the means when the means itself is moving in reverse.

Another preferred embodiment is that which allows, according to the same operating principle, to intervene on means on rail, such as bridge cranes, when the presence of pedestrians nearby is detected, and forcing the movement of the means to stop.

An extension of the system may contemplate the application of said TAGs not only to operators but also to static objects, such as walls or trellises or other machinery. In this manner, a further important anti-collision function is added between static and moving machinery with the simple addition of TAGs on objects which could potentially collide.

The present invention is intrinsically configurable in so-called fail-safe mode so that possible faults or power blackouts cause the immediate alarm signal as if the emergency situation actually occurred.

The apparatus object of the present invention thus comprises:
- a plurality of RF transceivers 11, of PAN or BAN (WPAN) type, each of which associated with either a garment or an accessory or an instrument to be used by an operator when engaged in an area of concern, said RF transceivers associated to said garments or accessories or instruments being connected to form a PAN or BAN network in which one of said RF transceivers is configured as MASTER of said PAN or BAN network and characterized in that at least one of said RF transceivers comprises a TAG device 10;
- a plurality of illuminating actuators 12, 14, 16 and receivers 13, 15, 17, each of which associated with either the apparatuses or the structures or parts thereof arranged in said area of concern.

The corresponding implementation method of the active safety apparatus described above comprises the following steps:
a) associating a plurality of RF transceivers 11 adapted to form a PAN or BAN network with the garments to be worn by the operator when, in the area of concern, said plurality of RF transceivers 11 comprising at least one dual-frequency TAG device 10 configured as a Master of said PAN or BAN network;
b) associating at least one illuminating actuator 12, 14, 16 and at least one receiver 13, 15, 17 with each critical element of the area of concern;
c) said dual-frequency RFID TAG with Master functions 10 recognizes the presence of all RF transceiver devices 11 of said PAN or BAN network, and either sends or stores an alarm if the absence of at least one of them is detected;
d) said dual-frequency RFID TAG with Master functions 10 interacts with said at least, one illuminating actuator 12, 14, 16 and at least one receiver 13, 15, 17 so as to regulate the operation of said critical elements in the area of concern in order to protect the safety of said operator.

In the case in which said critical element in the area of concern comprises an access control passageway, said step d) is carried out by the sequence of the following steps:
e) when the operator turns up at an access control passageway associated to at least one illuminating actuator 12, 14, 16 and at least one receiver 13, 15, 17, said dual-frequency RFID TAG with Master functions 10 is activated, it sends the possible reply associated with presence information of all the protection devices needed for the operator to perform his or her activity, and opens the passageway if the operator is recognized as having all the requirements needed to enter the area of concern;
f) possibly registering additional information transmitted by said TAG 10 to said at least one receiver 13, 15, 17 comprising, for example, the identification of the operator, date and time of access, number and type of accessories and special garments worn when the operator enters;
g) when the operator turns up again at said access control passageway associated to at least one illuminating actuator 12, 14, 16 and at least one receiver 13, 15, 17, said passageway registers the exiting of the operator, possibly downloading historical presence data of the personal protection devices worn by said operator.

Furthermore, the following, additional step may be carried out with periodical frequency:
h) said dual-frequency RFID TAG with Master functions 10 establishes periodical connections with said plurality of RF transceivers 11 controlling their actual presence and storing the detected presence history.

If the operator is within the range of action of a mobile means provided with at least one illuminating actuator 12, 14, 16 and at least one receiver 13, 15, 17, said step d) is carried out by the following step:
i) said dual-frequency RFID TAG with Master functions (10) is activated and replies, thus causing an alarm signaling aboard said mobile means, possibly inducing the driver to stop and pay particular attention until the transit of the operator in close proximity ceases.

If the operator is within the range of action of a static means, such as a press, provided with at least one illuminating actuator 12, 14, 16 and at least one receiver 13, 15, 17, said step d) is carried out by the following step:
j) said dual-frequency RFID TAG with Master functions 10 is activated and replies by stopping said static means.

## Claims

1. A system for controlling safety and preventing accidents at the workplaces, the system comprising: a plurality of RF transceivers (11), each associated with either a garment or an accessory or an instrument to be used by an operator when engaged in an area of concern, a plurality of illuminating actuators (12, 14, 16) and receivers (13, 15, 17), each associated with either the apparatuses or the structures or parts thereof arranged in said area of concern said RF transceivers (11) being configured to form a network of Personal Area Network PAN or Body Area Network BAN type, and comprising at least one RF transceiver (11) configured as a MASTER of said PAN or BAN network, **characterized in that** at least one of said RF transceivers (11) comprises a dual-frequency controlled RFID transmitter device (10).

2. The system according to claim 1, wherein said RF transceivers (11) comprise RF transceivers of either Personal Area Network PAN or Body Area Network BAN or Wireless Personal Area Network WPAN type.

3. The system according to claims 1-2, wherein said garments accessories or instruments to be used by an operator engaged in an area of concern are chosen from the group comprising gloves, footwear, safety harness, helmet.

4. The system according to claims 1-3, wherein said apparatuses or structures located in said area of concern are chosen from the group comprising controlled safety passageways, self-propelled machineries or means, static machineries or means, walls, trellises.

5. A method for controlling safety and preventing accidents at the workplaces comprising the following steps:
a) associating a plurality of RF transceivers (11) adapted to form a Personal Area Network PAN or Body Area Network BAN with the accessories and garments to be worn by the operator when said operator is in the area of concern, said plurality of RF transceivers (11) comprising at least one dual-frequency RFID TAG device (10) configured as a Master of said Personal Area Network PAN or Body Area Network BAN;
b) associating at least one illuminating actuator (12, 14, 16) and at least one receiver (13, 15, 17) with each critical apparatus or structure or parts thereof of the area of concern;
c) said dual-frequency RFID TAG with Master functions (10) reconizing the presence of all RF transceiver devices (11) of said Personal Area Network PAN or Body Area Network BAN and either sending or storing an alarm if the absence of at least one of them is detected;
d) said dual-frequency RFID TAG with Master functions (10) interacting with said at least one illuminating actuator (12, 14, 16) and at least one receiver (13, 15, 17) so as to regulate the operation of said critical apparatuses or structures in the area of concern in order to protect the safety of said operator.

6. The method according to claim 5, wherein said critical apparatuses or structures in the area of concern comprise an access control passageway and said step d) is carried out by the following steps in sequence:
e) during a first approach of said operator to said access control passageway, said dual-frequency RFID TAG with Master functions (10) is activated, said TAG with Master functions sending the possible reply associated with presence information of all the protection devices needed for the operator to perform his or her activity, and opening said access control passageway if the operator is recognized as having all the requirements needed to enter the area of concern;
f) possibly registering additional information transmitted by said TAG (10) to said at least one receiver (13, 15, 17);
g) during a second approach of said operator to the access control passageway, said passageway registering the exiting of the operator, downloading historical presence data of said accessories and said garments which must be worn by the operator when he or she is in the area of concern.

7. A method according to claim 5, where said critical apparatuses or structures in the area of concern comprise a mobile means provided with at least one illuminating actuator (12, 14, 16) and at least one receiver (13, 15, 17), said step d) is carried out by the following step:
i) said dual-frequency RFID TAG with Master functions (10) is activated and replies, thus causing an alarm signaling aboard said mobile means, possibly inducing the driver to stop and pay particular attention until the transit of the operator in close proximity ceases.

8. A method according to claim 5, wherein said critical apparatuses or structures in the area of concern comprise a static machinery or means provided with at least one illuminating actuator (12, 14, 16) and at least one receiver (13, 15, 17), said step d) is carried out by the following step:
j) said dual-frequency RFID TAG with Master functions (10) is activated and replies by stopping said static means.

9. A method according to claims 5-8, wherein the following further step is recursively carried out at a periodic frequency:
h) said dual-frequency RFID TAG with Master functions (10) establishing periodical connections with said plurality of RF transceivers (11) controlling their actual presence and storing the detected presence history.

## Patentansprüche

1. System zum Kontrollieren der Sicherheit und zum Verhindern von Unfällen an den Arbeitsplätzen, wobei das System umfasst: eine Mehrzahl von HF-Transceivern (11), die jeweils entweder einem Kleidungsstück oder einem Zubehör oder einem Instrument zugeordnet sind, das von einem Bediener zu verwenden ist, wenn er in einem betreffenden Bereich beschäftigt ist, eine Mehrzahl von Beleuchtungsaktoren (12, 14, 16) und Empfängern (13, 15, 17), die jeweils entweder den Vorrichtungen oder den Strukturen oder Teilen davon zugeordnet sind, die in dem betreffenden Bereich angeordnet sind, wobei die HF-Transceiver (11) ausgestaltet sind, um ein Netz von der Art eines Personal Area Network PAN oder Body Area Network BAN zu bilden, und zumindest einen HF-Transceiver (11) umfasst, der als ein MASTER des PAN- oder BAN-Netzes ausgestaltet ist, **dadurch gekennzeichnet, dass** zumindest einer der HF-Transceiver (11) eine doppelfrequenzgesteuerte RFID-Sendereinrichtung (10) umfasst.

2. System nach Anspruch 1, wobei die HF-Transceiver (11) HF-Transceiver der Art von entweder einem Personal Area Network PAN oder einem Body Area Network BAN oder einem Wireless Personal Area Network WPAN umfassen.

3. System nach den Ansprüchen 1-2, wobei die Kleidungsstücke, Zubehöre oder Instrumente, die von einem Bediener zu verwenden sind, der in einem betreffenden Bereich beschäftigt ist, aus der Gruppe gewählt sind, die Handschuhe, Fußbekleidung, Sicherheitsgurtgeschirr, Helm umfasst.

4. System nach den Ansprüchen 1-3, wobei die Vorrichtungen oder Strukturen, die sich innerhalb des betreffenden Bereichs befinden, aus der Gruppe gewählt sind, die kontrollierte Sicherheitsdurchgänge, Maschinen oder Mittel mit Eigenantrieb, statische Maschinen oder Mittel, Wände, Gitter umfasst.

5. Verfahren zum Kontrollieren der Sicherheit und zum Verhindern von Unfällen an den Arbeitsplätzen, das die folgenden Schritte umfasst:
a) Zuordnen einer Mehrzahl von HF-Transceivern (11), die ausgebildet sind, um ein Personal Area Network PAN oder Body Area Network BAN mit den Zubehören und Kleidungsstücken zu bilden, die von dem Bediener zu tragen sind, wenn der Bediener sich in dem betreffenden Bereich befindet, wobei die Mehrzahl von HF-Transceivern (11) zumindest eine Doppelfrequenz-RFID-TAG-Einrichtung (10) umfasst, die als ein Master des Personal Area Network PAN oder Body Area Network BAN ausgestaltet ist;
b) Zuordnen zumindest eines Beleuchtungsaktors (12, 14, 16) und zumindest eines Empfängers (13, 15, 17) zu jeder kritischen Vorrichtung oder Struktur oder Teilen davon des betreffenden Bereichs;
c) wobei das Doppelfrequenz-RFID-TAG mit Master-Funktionen (10) die Anwesenheit aller HF-Transceivereinrichtungen (11) des Personal Area Network PAN oder Body Area Network BAN erkennt und einen Alarm entweder sendet oder speichert, falls das Fehlen von zumindest einer derselben detektiert wird;
d) das Doppelfrequenz-RFID-TAG mit Master-Funktionen (10) mit dem zumindest einen Beleuchtungsaktor (12, 14, 16) und zumindest einen Empfänger (13, 15, 17) wechselwirkt, um den Betrieb der kritischen Vorrichtungen oder Strukturen in dem betreffenden Bereich zu regulieren, um die Sicherheit des Bedieners zu gewährleisten.

6. Verfahren nach Anspruch 5, wobei die kritischen Vorrichtungen oder Strukturen in dem betreffenden Bereich einen Zugangskontrolldurchgang umfassen, und der Schritt d) durch die folgenden Schritte in Folge ausgeführt wird:
e) während einer ersten Annäherung des Bedieners an den Zuggangskontrolldurchgang der Doppelfrequenz-RFID-TAG mit Master-Funktionen (10) aktiviert wird, wobei das TAG mit Master-Funktionen die mögliche Antwort, die Anwesenheitsinformationen aller Schutzeinrichtungen zugeordnet ist, die für den Bediener notwendig sind, um ihre oder seine Aktivität durchzuführen, sendet und den Zugangskontrolldurchgang öffnet, wenn erkannt wird, dass der Bediener alle notwendigen Anforderungen erfüllt, um in den betreffenden Bereich einzutreten;
f) möglicherweise Registrieren zusätzlicher Informationen, die von dem TAG (10) zu dem zumindest einen Empfänger (13, 15 17) übertragen werden;
g) während einer zweiten Annäherung des Bedieners an den Zugangskontrolldurchgang der Durchgang den Austritt des Bedieners registriert, wobei historische Anwesenheitsdaten der Zubehöre und der Kleidungsstücke, die von dem Bediener getragen werden müssen, wenn er oder sie sich in dem betreffenden Bereich befindet, heruntergeladen werden.

7. Verfahren nach Anspruch 5, wobei die kritischen Vorrichtungen oder Strukturen in dem betreffenden Bereich ein mobiles Mittel umfassen, das mit zumindest einem Beleuchtungsaktor (12, 14, 16) und zumindest einem Empfänger (13, 15, 17) versehen ist, wobei der Schritt d) durch den folgenden Schritt ausgeführt wird:
i) das Doppelfrequenz-RFID-TAG mit Master-Funktionen (10) wird aktiviert und antwortet, wodurch ein Alarm bewirkt wird, der am mobilen Mittel signalisiert wird, wobei möglicherweise ausgelöst wird, dass der Fahrer anhält und besondere Aufmerksamkeit zollt, bis der Durchgang des Bedieners in enger Nähe endet.

8. Verfahren nach Anspruch 5, wobei die kritischen Vorrichtungen oder Strukturen in dem betreffenden Bereich eine statische Maschine oder Mittel umfassen, die mit zumindest einem Beleuchtungsaktor (12, 14, 16) und zumindest einem Empfänger (13, 15, 17) versehen sind, wobei Schritt d) durch den folgenden Schritt ausgeführt wird:
j) das Doppel-Frequenz-RFID-TAG mit Master-Funktionen (10) wird aktiviert und antwortet, indem das statische Mittel gestoppt wird.

9. Verfahren nach den Ansprüchen 5-8, wobei der folgende weitere Schritt rekursiv mit einer periodischen Frequenz ausgeführt wird:
h) das Doppelfrequenz-RFID-TAG mit Master-Funktionen (10) stellt periodische Verbindungen mit der Mehrzahl von HF-Transceivern (11) her, wobei deren tatsächliche Anwesenheit kontrolliert wird und die detektierte Anwesenheitshistorie gespeichert wird.

## Revendications

1. Système de commande de sécurité et de prévention d'accidents sur les lieux de travail, le système comprenant : une pluralité d'émetteurs-récepteurs RF (11), chacun d'eux étant associé avec soit un vêtement, soit un accessoire, soit un instrument à utiliser par un opérateur intervenant dans une zone délicate, une pluralité d'actionneurs éclairants (12, 14, 16) et de récepteurs (13, 15, 17), chacun d'eux étant associé avec soit les appareils, soit les structures, soit des parties de ceux-ci agencés dans ladite zone délicate, lesdits émetteurs-récepteurs RF (11) étant configurés pour constituer un réseau de type réseau personnel, PAN, ou réseau corporel, BAN, et comprenant au moins un émetteur-récepteur RF (11) configuré en tant que maître dudit réseau PAN ou BAN, **caractérisé en ce qu'**au moins l'un desdits émetteurs-récepteurs RF (11) comprend un dispositif émetteur RFID à commande bi-fréquence (10).

2. Système selon la revendication 1, dans lequel lesdits émetteurs-récepteurs RF (11) comprennent des émetteurs-récepteurs RF de type soit réseau personnel, PAN, soit réseau corporel, BAN, soit réseau personnel sans fil, WPAN.

3. Système selon les revendications 1 et 2, dans lequel lesdits vêtements, accessoires ou instruments à utiliser par un opérateur intervenant dans une zone délicate sont choisis dans le groupe se composant de gants, de chaussures, de harnais de sécurité et de casque.

4. Système selon les revendications 1 à 3, dans lequel lesdits appareils ou structures situés dans ladite zone délicate sont choisis dans le groupe se composant de voies de passage de sécurité contrôlée, de machines ou de moyens à autopropulsion, de machines ou de moyens statiques, de parois et de treillis.

5. Procédé de commande de sécurité et de prévention d'accidents sur les lieux de travail, comprenant les étapes suivantes :
a) l'association d'une pluralité d'émetteurs-récepteurs RF (11) adaptés pour constituer un réseau personnel, PAN, ou un réseau corporel, BAN, avec les accessoires et les vêtements à porter par l'opérateur lorsque ledit opérateur est dans la zone délicate, ladite pluralité d'émetteurs-récepteurs RF (11) comprenant au moins un dispositif d'étiquette RFID bi-fréquence (10) configuré en tant que maître dudit réseau personnel, PAN, ou dudit réseau corporel, BAN ;
b) l'association d'au moins un actionneur éclairant (12, 14, 16) et d'au moins un récepteur (13, 15, 17) avec chaque appareil ou structure critique ou à des parties de cela dans la zone délicate ;
c) ladite étiquette RFID bi-fréquence avec des fonctions de maître (10) reconnaissant la présence de tous les dispositifs émetteurs-récepteurs RF (11) dudit réseau personnel, PAN, ou dudit réseau corporel, BAN, et soit envoyant, soit mémorisant une alarme si l'absence d'au moins l'un d'entre eux est détectée ;
d) ladite étiquette RFID bi-fréquence avec des fonctions de maître (10) interagissant avec ledit au moins un actionneur éclairant (12, 14, 16) et ledit au moins un récepteur (13, 15, 17) de manière à réguler le fonctionnement desdits appareils ou structures critiques dans la zone délicate afin de protéger la sécurité dudit opérateur.

6. Procédé selon la revendication 5, dans lequel lesdits appareils ou structures critiques dans la zone délicate comprennent une voie de passage de contrôle d'accès et ladite étape d) est effectuée par les étapes suivantes en séquences :
e) au cours d'une première approche dudit opérateur vers ladite voie de passage de contrôle d'accès, ladite étiquette RFID bi-fréquence avec des fonctions de maître (10) est activée, ladite étiquette avec des fonctions de maître envoyant la réponse possible associée avec des informations de présence de tous les dispositifs de protection nécessaires pour que l'opérateur effectue son activité, et ouvrant ladite voie de passage de contrôle d'accès s'il est reconnu que l'opérateur répond à toutes les exigences fixées pour entrer dans la zone délicate ;
f) l'enregistrement éventuel d'informations supplémentaires transmises par ladite étiquette (10) au dit au moins un récepteur (13, 15, 17) ;
g) au cours d'une deuxième approche dudit opérateur vers la voie de passage de contrôle d'accès, ladite voie de passage enregistrant la sortie de l'opérateur, téléchargeant des données d'historique de présence desdits accessoires et desdits vêtements qui doivent être portés par l'opérateur lorsqu'il se trouve dans la zone délicate.

7. Procédé selon la revendication 5, où lesdits appareils ou structures critiques dans la zone délicate comprennent un moyen mobile pourvu d'au moins un actionneur éclairant (12, 14, 16) et d'au moins un récepteur (13, 15, 17), ladite étape d) est effectuée par l'étape suivante :
i) ladite étiquette RFID bi-fréquence avec des fonctions de maître (10) est activée et répond, provoquant ainsi une signalisation d'alarme à l'intérieur dudit moyen mobile, en amenant éventuellement le conducteur à s'arrêter et à faire particulièrement attention jusqu'à la fin du passage de l'opérateur à proximité étroite.

8. Procédé selon la revendication 5, dans lequel lesdits appareils ou structures critiques dans la zone délicate comprennent une machine ou un moyen statique pourvu d'au moins un actionneur éclairant (12, 14, 16) et d'au moins un récepteur (13, 15, 17), ladite étape d) est effectuée par l'étape suivante :
j) ladite étiquette RFID bi-fréquence avec des fonctions de maître (10) est activée et répond en arrêtant ledit moyen statique.

9. Procédé selon les revendications 5 à 8, dans lequel l'étape supplémentaire suivante est effectuée de manière récursive à une fréquence périodique :
h) ladite étiquette RFID bi-fréquence avec des fonctions de maître (10) établissant des connexions périodiques avec ladite pluralité d'émetteurs-récepteurs RF (11), contrôlant leur présence réelle et mémorisant l'historique de détection de présence.
